# EUROPÄISCHE PATENTANMELDUNG

(11) **EP 2 039 947 A2**
(43) Veröffentlichungstag der Anmeldung: **25.03.2009**
(21) Anmeldenummer: 08016002.1
(22) Anmeldetag: 11.09.2008
(51) Int. Cl.: F16B 19/08

(54) **Selbstlochendes Element**

(30) Priorität: 19.09.2007 DE 102007044635
(71) Anmelder: Böllhoff Verbindungstechnik GmbH, 33649 Bielefeld (DE); FRIMO Viersen GmbH, 41751 Viersen-Boisheim (DE)
(72) Erfinder: Stumpf, Michael, 33611 Bielefeld (DE); Marxkors, Andreas, 33161 Hövelhof (DE); Bachmeier, Stephan, 53474 Bad Neuenahr (DE); Pekal, Christoph, 47798 Krefeld (DE); Simon, Jörg, 41189 Mönchengladbach (DE); Langer, Matthias, 92726 Waidhaus (DE)
(74) Vertreter: Heyer, Volker

(57) **Zusammenfassung**

Die vorliegende Erfindung offenbart ein selbstlochendes Element 1, das mittels Lochen und Umbördeln mit einem Strukturbauteil 5 verbindbar ist. Des Weiteren offenbart die vorliegende Erfindung eine Vorrichtung zum Setzen des selbstlochenden Elements 1 und ein entsprechendes Verfahren. Das selbstlochende Element 1 umfasst einen Funktionskopf 10, eine Sitzgeometrie 30 und eine Schneidgeometrie 20, während die Schneidgeometrie 20 eine radial außen angeordnete zentrierende Außenfase 22, eine radial innen angeordnete Innenfase 24 sowie eine dazwischen angeordnete Schnittkante 26 aufweist.

## Beschreibung

### 1. Gebiet der Erfindung,

Die vorliegende Erfindung betrifft ein selbstlöchendes Element, das mittels Lochen und Umbördeln mit einem Strukturbauteil, vorzugsweise einem Strukturbauteil aus Kunststoff im Kraftfahrzeugbau, verbindbar ist. Des Weiteren betrifft die vorliegende Erfindung ein Strukturbauteil, in dem ein derartiges selbstlochendes Element befestigt ist, eine Vorrichtung zum Einbringen eines derartigen selbstlochenden Elements sowie ein Befestigungsverfahren, mit dessen Hilfe ein derartiges selbstlochendes Element in dem Strukturbauteil befestigbar ist.

### 2. Hintergrund der Erfindung

Beispielsweise im Kraftfahrzeugbau werden großflächige Strukturbauteile als Spritzschutz im Unterbodenbereich und im Frontendbereich des Fahrzeugs eingesetzt. Diese Strukturbauteile, die auch in anderen Bereichen des Kraftfahrzeugs Anwendung finden, bestehen aus unterschiedlichen Kunststoffen mit oder ohne Faserverstärkung. Beispiele für die Werkstoffe sind SCT, GMT, CFK, PP Langfaser oder ähnliche. Diese Strukturbauteile werden einerseits an Rahmenstrukturen des Kraftfahrzeugs angebunden. Andererseits dienen sie als Anbindungspunkte für weitere Anbaukomponenten im Kraftfahrzeug.

Derartige Anbindungspunkte werden durch Gewindeelemente oder Lochverstärkungselemente gebildet, um nur einige Beispiele zu nennen. Diese Wahl der Anbindungspunkte ist erforderlich, da die Kunststoff-Strukturbauteile nur eine geringe Festigkeit aufweisen und zudem bei mechanischer Belastung zur Relaxation neigen. Nach der Herstellung der Strukturbauteile werden diese Gewindeelemente oder Lochverstärkungselemente nachträglich durch verschiedene Verfahren eingebracht und gegebenenfalls vernietet.

Eine weitere Alternative besteht darin, Elemente zum Bereitstellen von Anbindungspunkten in vorab gelochten Sitzgeometrien zu befestigen. Die Löcher und Ausschnitte zum Befestigen der Anbindungspunkte werden im Allgemeinen durch Stanzoperationen erzeugt. In diesem Zusammenhang ist es erforderlich, alle Stanzlinge sicher zu entfernen. Einerseits wird dadurch gewährleistet, dass beispielsweise Gewindeeinsätze ohne Probleme in den Anbindungspunkten installiert werden können. Andererseits ermöglicht das Entfernen der Stanzlinge den Einsatz eines Werkzeugs zur Nachbearbeitung des Kunststoffbauteils, wie beispielsweise das Beschneiden der Kanten. Als weitere Alternativen existieren das Bohren oder Fräsen der Sitzgeometrien. Mit ihrer Hilfe sind jedoch nur eingeschränkt nicht runde Geometrien realisierbar. Zudem erfordern diese Verfahren eine geeignete Möglichkeit zur Abfuhr der bei der Bearbeitung entstehenden Späne.

Die notwendige Verdrehfestigkeit der Anbindungspunkte bzw. der Gewindeelemente wird im Allgemeinen durch eine polygonale Sitzgeometrie, also einen polygonalen Querschnitt der Sitzgeometrie, sowohl am Element als auch im Kunststoff-Strukturbauteil gewährleistet. Die nicht runde Vorlochung des Strukturbauteils bedingt eine Rotationspositionierung des Elements relativ zum Strukturbauteil. Diese verdrehsichere Positionierung erfordert jedoch zusätzlichen Aufwand sowohl bei der Formgebung des Elements als auch im Prozess des Befestigens des Elements im Strukturbauteil. Dieser zusätzliche Aufwand ist gleichzeitig mit einer gesteigerten Störanfälligkeit im Verarbeitungsprozess im Vergleich zu einfacheren Verfahren verbunden.

Die Verwendung selbststanzender Elemente ist beispielsweise aus der DE 37 44 450 C2 und der JP 2002093489 A bekannt. Derartige selbststanzende Elemente vermeiden den zusätzlichen Aufwand, ein zu befestigendes Bauteil in einem zweiten Arbeitsschritt nach der Locherzeugung geeignet zu positionieren, um beispielsweise den runden oder nicht runden Metall-Einsatz in einem zweiten Arbeitsschritt einzubringen. Zu diesem Zweck muss jedoch in dem selbststanzenden Element eine Schneidengeometrie vorgesehen sein. Somit stellt das selbststanzende Element sein eigenes Werkzeug dar. Zudem ist es notwendig, für eine gesicherte Abfuhr der Stanzabfälle bzw. der Späne zu sorgen, um für eine verlässliche Verbindung zwischen selbststanzendem Element und Strukturbauteil zu sorgen.

Eine weitere Konstruktion selbststanzender Befestiger ist in DE 20 2005 015 713 U1 beschrieben. Diese selbststanzenden Befestiger bzw. Elemente werden durch Stanzen und Umbördeln mit einem dünnwandigen Kunststoffteil verbunden. Die Schneidkante des selbststanzenden Elements durchstanzt bzw. locht beim Setzen das Kunststoffteil und wird nachfolgend verformt, so dass das Element im Kunststoffteil befestigt ist. Um die notwendige drehfeste Fixierung des selbststanzenden Elements, beispielsweise ein Gewindeelement zu sichern, wird es mit einer unrunden - im Allgemeinen polygonalen - Sitzgeometrie ausgestattet. Die Schneidengeometrie am Element als auch die entsprechende Matrize ist aus Kostengründen häufig rund vorgesehen, wodurch insbesondere in der Großserie nicht vollständig gelöste Materialverbindungen zwischen dem Lochbutzen und dem Kunststoffbauteil zu einer erhöhten Störanfälligkeit führen.

Aufgrund der geringen plastischen Verformbarkeit von Kunststoffen, im Speziellen von faserverstärkten Kunststoffen, ist ein Einprägen des Kunststoffs in die durch Stanzmuttern gebildeten Hinterschnitte nicht möglich. Dies schließt eine Übertragung von bekannten Verfahren und Konstruktionen beim Setzen von Elementen in Metallbauteilen aus. Daher ist ein sicherer Sitz des selbststanzenden Elements nur durch ein Vernieten der Schneidengeometrie erreichbar, die groß genug sein muss, um die zulässige Flächenpressung des angeschraubten Bauteils nicht zu überschreiten.

Im Vergleich zum bekannten Stand der Technik ist es somit das Problem der vorliegenden Erfindung, ein selbstlochendes Element bereitzustellen, das mittels Lochen und Umbördeln verlässlich und einfach in Strukturbauteilen, vorzugsweise aus Kunststoff, befestigbar ist. In diesem Zusammenhang ist es ein weiteres Problem der vorliegenden Erfindung, eine geeignete Vorrichtung und ein entsprechendes Verfahren zum Befestigen dieses selbstlochenden Elements zu liefern.

### 3. Zusammenfassung der Erfindung

Die obigen Probleme werden durch ein selbstlochendes Element gemäß dem unabhängigen Patentanspruch 1, durch ein Strukturbauteil mit diesem selbstlochenden Element gemäß dem unabhängigen Patentanspruch 17, durch eine Vorrichtung zum Setzen eines selbstlochenden Elements gemäß dem unabhängigen Patentanspruch 18 sowie durch ein Setzverfahren für ein selbstlochendes Element in einem Strukturbauteil gemäß dem unabhängigen Patentanspruch 22 gelöst. Vorteilhafte Ausführungsformen der vorliegenden Erfindung gehen aus den anhängenden Ansprüchen, der folgenden Beschreibung sowie den begleitenden Zeichnungen hervor.

Das selbstlochende Element, das mittels Lochen und Umbördeln mit einem Strukturbauteil, vorzugsweise aus Kunststoff, verbindbar ist, weist die folgenden Merkmale auf: einen an einem Ende des Elements und koaxial zur Längsachse des Elements angeordneten Funktionskopf, eine koaxial zur Längsachse des Elements angeordnete Schneidgeometrie sowie eine zwischen Funktionskopf und Schneidgeometrie angeordnete Sitzgeometrie, während die Schneidgeometrie eine radial außen angeordnete zentrierende Außenfase, eine radial innen angeordnete Innenfase sowie eine dazwischen angeordnete Schnittkante umfasst.

Das erfindungsgemäße selbstlochende Element erlaubt die Einbringung und Verankerung eines Elements in Axial- und Rotationsrichtung. Das selbstlochende Element wird vorzugsweise in großflächigen Kunststoff-Strukturbauteilen aus duro- oder thermoplastischem Material, mit oder ohne Faserverstärkung aus Glas- oder Kohlefaser, in ein- oder mehrlagigem Aufbau sowie ohne die Notwendigkeit der vorab durchgeführten Lochung eingebracht. Zur universellen Anwendung des selbstlochenden Elements weist dieses beispielsweise ein Innengewinde, eine Außenfunktionskontur oder ein Durchgangsloch auf, um verschiedene Befestigungsalternativen oder die unterschiedlichen Anbindungspunkte beispielsweise im Kraftfahrzeug bereitzustellen.

Gemäß einer bevorzugten Ausführungsform weist die Schnittkante eine Breite von 0,15 ± 0,1 mm auf. Zudem ist es denkbar, dass sich die Außenfase über eine Länge von 0,1 bis 0,2 mm ab der Schnittkante erstreckt und in einem Winkel von 10° zur Längsachse des selbstlochenden Elements angeordnet ist. Um das selbstlochende Element auf einen sich ergebenden ringförmigen Kontakt zwischen Element und Strukturbauteil und/oder an eine zulässige Flächenpressung des Strukturbauteils anpassen zu können, ist die Schneidgeometrie in ihrer Länge definierbar. In diesem Zusammenhang ist es bevorzugt, dass die Schnittkante des selbstlochenden Elements entlang einer Außenfläche einer gedachten Walze verläuft, deren Walzenlängsachse senkrecht zur Längsachse des selbstlochenden Elements angeordnet ist, so dass ein Teil der Schnittkante in Bezug auf die verbleibende Schnittkante in Richtung der Längsachse des selbstlochenden Elements versetzt ist. Diese Gestaltung der Schneidgeometrie gewährleistet einen sich selbst zentrierenden ziehenden Stanz- bzw. Schneidprozess durch das selbstlochende Element.

In einer weiteren Ausgestaltung des selbstlochenden Elements ist dessen Innenfase in einem Winkel von ≤ 45° zur Längsachse des selbstlochenden Elements angeordnet. Es ist zudem bevorzugt, die Innenfase in einem Winkelbereich von 30° bis 40° vorzusehen. In einer anderen Ausführungsform des selbstlochenden Elements ist die Innenfase in einem Winkel von ≥60°, vorzugsweise in einem Winkelbereich von 70° bis 85°, zur Längsachse des selbstlochenden Elements angeordnet. Diese Ausgestaltung des selbstlochenden Elements ist preiswert in seiner Herstellung im Vergleich zu bekannten Alternativen. Des Weiteren unterstützt diese Formgebung das Setzen des selbstlochenden Elements in harten Werkstoffen, wie beispielsweise CFK, sowie das Setzen mit geringem Überstand des selbstlochenden Elements, so dass beispielsweise ein Umbördeln des Überstands nicht notwendig ist. Gemäß einer weiteren Ausgestaltung umfasst das selbstlochende Element eine zweite Außenfase, die radial auswärts von der außen angeordneten zentrierenden Außenfase angeordnet ist.

Um den Halt des selbstlochenden Elements zu unterstützen, umfasst gemäß einer Alternative dessen Sitzgeometrie an ihrer radialen Außenseite eine unterstützende Haltestruktur und/oder einen radial nach innen versetzten Sitzbereich. Diese Haltestrukturen wirken beispielsweise als Hinterschnitt in Richtung der Längsachse und/oder in Drehrichtung um die Längsachse des selbstlochenden Elements in Abhängigkeit von der Anordnung dieser Haltestruktur.

Gemäß einer weiteren bevorzugten Ausgestaltung des selbstlochenden Elements ist dessen Sitzgeometrie in einen ersten und einen zweiten Sitzbereich aufgeteilt, während der zweite Sitzbereich zum Befestigen des selbstlochenden Elements konisch aufweitbar ist. Zudem sind erster und zweiter Sitzbereich in Abstimmung auf das Strukturbauteil derart dimensioniert, dass sich der erste Sitzbereich über 30 % und der zweite Sitzbereich über 70 % einer Dicke des Strukturbauteils an der Fügestelle des selbstlochenden Elements erstreckt.

Um den Halt des selbstlochenden Elements in Kunststoffen weiter zu verbessern, vorzugsweise in plastisch verformbaren Kunststoffen, umfasst der Funktionskopf an seiner der Schneidgeometrie zugewandten Seite eine vorstehende Unterkopfkontur, die eine definierte Auflage des selbstlochenden Elements auf dem Strukturbauteil unterstützt. Diese kann optional ergänzt sein durch eine Unterkopfnut, in der eine Materialanhäufung beim Setzen des selbstlochenden Elements aufnehmbar ist, um ein Aufsetzen des Funktionskopfs auf dem Strukturbauteil zu unterstützen.

Die erfindungsgemäße Vorrichtung zum Setzen des selbstlochenden Elements in einem Strukturbauteil weist die folgenden Merkmale auf: einen Stempel und ein Nietwerkzeug, die gegenüberliegend angeordnet und parallel zu ihrer Längsachse in Fügerichtung bewegbar sind, eine aus mindestens zwei bewegbar angeordneten Segmenten aufgebaute Matrize, die eine Öffnung für den Stempel mit selbstlochendem Element definiert, während eine Position der Matrizensegmente derart einstellbar ist, dass ein Spalt zwischen Innenseite der Öffnung und Außenseite des selbstlochenden Elements in seiner Breite in Abhängigkeit vom Material des Strukturbauteils und/oder der Bedingungen eines Setzvorgangs anpassbar ist, um das selbstlochende Element optimal zu befestigen.

In weiterer Ausgestaltung der Vorrichtung umfasst das Nietwerkzeug eine an eine Schneidgeometrie des selbstlochenden Elements angepasste Nietkontur, mit der die Schneidgeometrie radial auswärts umformbar ist. Zudem ist es bevorzugt, die Matrize der Vorrichtung an ihrer dem Stempel zugewandten Seite nahe der Öffnung mit einer radial umlaufenden und vorstehenden Kontur auszustatten, mit der eine Senke im Strukturbauteil generierbar ist.

Das erfindungsgemäße Setzverfahren für das selbstlochende Element in dem Strukturbauteil mit Hilfe der oben beschriebenen Vorrichtung weist die folgenden Schritte auf: Positionieren des selbstlochenden Elements mit Schneidgeometrie am Stempel, Positionieren des Strukturbauteils auf der Matrize und Ausschneiden eines Butzens aus dem Strukturbauteil durch Zustellen des Stempels zum Strukturbauteil und laterales Versetzen der Segmente der Matrize vom selbstlochenden Element und Umformen der Schneidgeometrie des selbstlochenden Elements durch Zustellen des Nietwerkzeugs zum Strukturbauteil.

Zur weiteren Ausgestaltung des Setzverfahrens ist es bevorzugt, die Segmente der Matrize derart zu Positionieren, dass ein Spalt zwischen Innenseite der Öffnung und Außenseite des selbstlochenden Elements in seiner Breite in Abhängigkeit vom Material des Strukturbauteils und/oder der Bedingungen eines Setzvorgangs angepasst wird, um das selbstlochende Element optimal zu befestigen.

Zudem wird das Strukturbauteil aus Kunststoff zumindest im Bereich der Setzstelle des selbstlochenden Elements vorzugsweise erwärmt oder das Strukturbauteil wird vorzugsweise noch vor vollständigem Abkühlen der Vorrichtung zugeführt, um das Setzen des selbstlochenden Elements zu erleichtern.

### 4. Kurze Beschreibung der begleitenden Zeichnung

Die vorliegende Erfindung wird unter Bezugnahme auf die begleitende Zeichnung näher erläutert. Es zeigen:
- Fig. 1A-C: verschiedene Ausführungsformen des selbstlochenden Elements,
- Fig. 2A-C, 3: verschiedene Ausführungsformen des selbstlochenden Elements befestigt in einem Strukturbauteil,
- Fig. 4: eine weitere Ausführungsform des selbstlochenden Elements,
- Fig. 5: das selbstlochende Element aus Fig. 4 im befestigten Zustand in einem Strukturbauteil,
- Fig. 6: eine weitere Ausführungsform eines selbstlochenden Elements,
- Fig. 7: das selbstlochende Element aus Fig. 6 im befestigten Zustand in einem Strukturbauteil,
- Fig. 8: die Veranschaulichung eines speziellen Merkmals einer Ausführungsform eines selbstlochenden Elements,
- Fig. 9: eine Schnittdarstellung des selbstlochenden Elements aus Fig. 8,
- Fig. 10: eine Ausschnittsvergrößerung des selbstlochenden Elements aus Fig. 9,
- Fig. 11: eine Detailansicht einer Ausführungsform des selbstlochenden Elements während des Setzens in einem Strukturbauteil,
- Fig. 12 bis 15: eine bevorzugte Ausführungsform einer Vorrichtung zum Setzen eines selbstlochenden Elements in unterschiedlichen Zuständen des Setzverfahrens,
- Fig. 16: eine schematische Darstellung eines Setzverfahrens des selbstlochenden Elements
- Fig. 17: eine Schnittdarstellung einer Ausführungsform der Matrizensegmente
- Fig. 18: ein Flussdiagramm bezüglich einer Ausführungsform des Setzverfahrens des selbstlochenden Elements
- Fig. 19: eine Schnittdarstellung einer weiteren Ausführungsform des selbstlochenden Elements,
- Fig. 20: eine Ausschnittsvergrößerung des mit X gekennzeichneten Bereichs in Fig. 19,
- Fig. 21, 22: eine Schnittdarstellung einer weiteren Ausführungsform des selbstlochenden Elements und
- Fig. 23: das selbstlochende Element aus Fig. 22 im gesetzten Zustand.

### 5. Detaillierte Beschreibung der bevorzugten Ausführungsformen

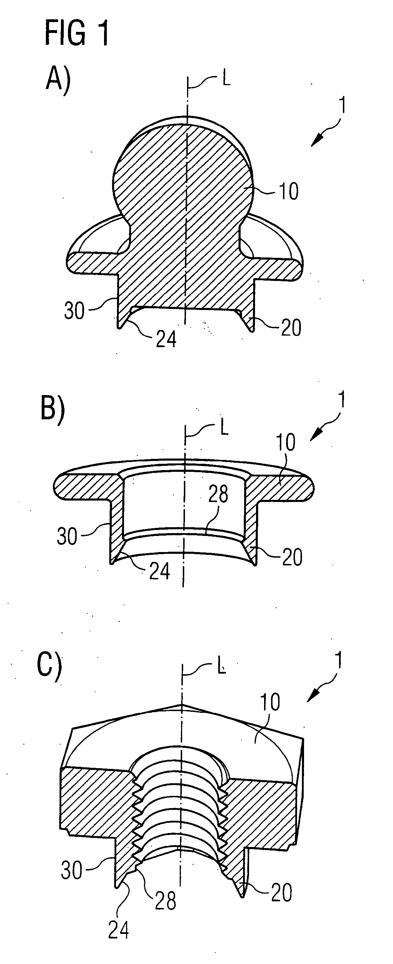

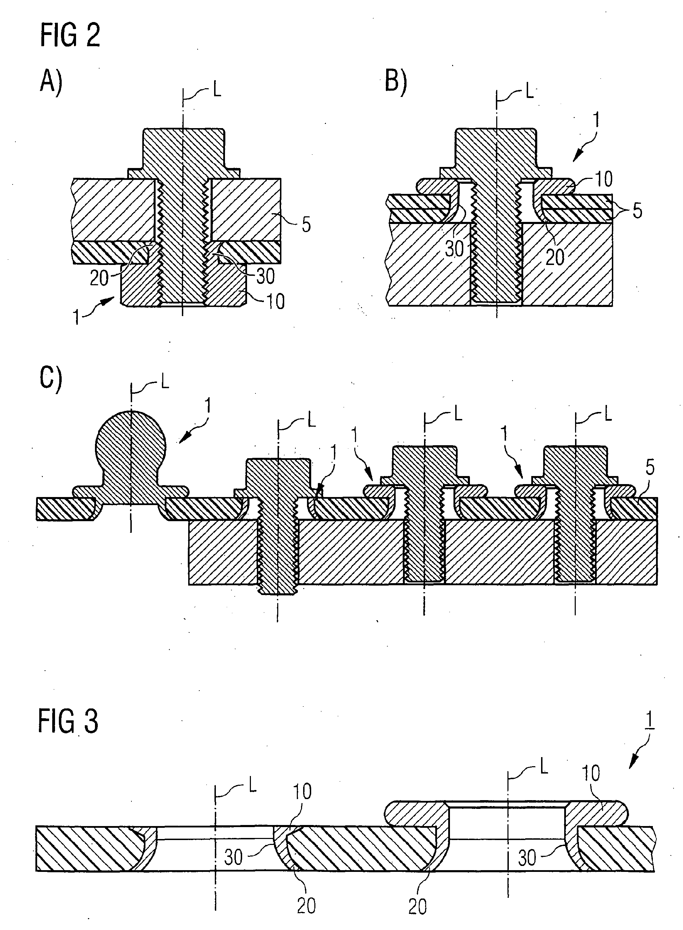

Die Figuren 1A-C zeigen verschiedene Ausführungsformen des selbstlochenden Elements 1. Bezogen auf seine Längsachse L umfasst das selbstlochende Element 1 an einem Ende koaxial zu seiner Längsachse L einen Funktionskopf 10. Dieser Funktionskopf 10 ist in Abhängigkeit von der zu realisierenden Funktion am Strukturbauteil 5 unterschiedlich ausgebildet. Gemäß einer Alternative besteht der Funktionskopf 10 aus einem Kugelkopf gemäß Fig. 1A. Dieser dient beispielsweise der Befestigung einer Schnappverbindung. Gemäß einer weiteren Alternative bildet der Funktionskopf 10 einen stützenden Flansch, wie es in Fig. 1C dargestellt ist. Das selbstlochende Element aus Fig. 1C dient als Lochverstärkung, um das Strukturbauteil 5 beispielsweise mittels Schrauben an einer Rahmenstruktur zu befestigen. Gemäß der in Fig. 1B gezeigten Konstruktion stützt sich der Funktionskopf 10 auf den Strukturbauteil 5 ab. Eine weitere Alternative zeigt Fig. 1C, in der der Funktionskopf 10 ein Gewindeelement enthält. Wie man in den Figuren 2C und 3 erkennen kann, ist der Funktionskopf 10 ebenfalls in einer Senkstruktur ausgebildet. Während des Befestigens des selbstlochenden Elements 1 im Strukturbauteil 5 senkt sich somit der Funktionskopf 10 in die Oberfläche des Strukturbauteils 5 ein, um mit dieser bündig abzuschließen.

Des Weiteren umfasst das selbstlochende Element 1 eine koaxial zur Längsachse L des Elements 1 angeordnete Schneidgeometrie 20 sowie eine zwischen Funktionskopf 10 und Schneidgeometrie 20 angeordnete Sitzgeometrie 30. Die Schneidgeometrie 20 umfasst eine radial innen liegende Innenfase 24. Ebenfalls radial innenliegend ist eine Abstützkante 28 angeordnet, mit der ein ausgeschnittener Butzen 3 (siehe unten) abfangbar und ein Verklemmen des Butzens 3 im selbstlochenden Element 1 verhinderbar ist.

Im Strukturbauteil 5 befestigte selbstlochende Elemente 1 sind in den Figuren 2, 3, 5 und 7 gezeigt. Die großflächigen Strukturbauteile 5 dienen beispielsweise als Spritzschuss am Unterboden oder im Frontendbereich eines Kraftfahrzeugs. Vorzugsweise bestehen die Strukturbauteile 5 aus spröden, nicht-duktilen und/oder faserverstärkten Kunststoffen, wie beispielsweise duro- oder thermoplastische Materialien. Diese können mit oder ohne Faserverstärkung aus Glas- oder Kohlefasern ausgestattet sein. Als Beispielmaterialien sind in diesem Zusammenhang zu nennen: SCT, GMT, CFK, PP Langfaser oder ähnliche. Des Weiteren ist es bevorzugt, das Strukturbauteil 5 ein- oder mehrlagig aufzubauen. Mit Hilfe des erfindungsgemäßen selbstlochenden Elements 1 ergibt sich nun die Möglichkeit, die Vielzahl an denkbaren Strukturbauteilen 5 ohne die Notwendigkeit einer vorab durchgeführten Lochung mit derartigen selbstlochenden Elementen 1 auszustatten.

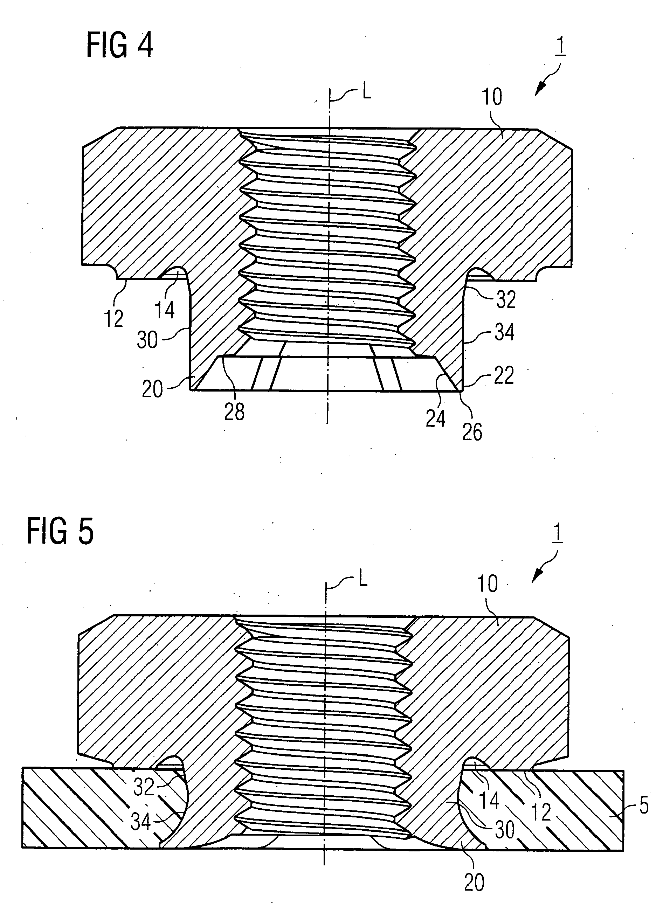

Wie man in den Figuren 2 und 3 erkennen kann, stützt sich der Funktionskopf 10 an einer Seite des Strukturbauteils 5 ab. Vorzugsweise liegt der Funktionskopf 10 vollflächig an der Oberfläche des Strukturbauteils 5 an. Gemäß einer weiteren Alternative ist es ebenfalls denkbar, dass er nur mit einer Stützkontur 12 an dem Strukturbauteil 5 anliegt (vgl. Fig. 4, 5).

Die Schneidgeometrie 20 und die Sitzgeometrie 30 verankern das selbstlochende Element 1 im Strukturbauteil 5. Diese Verankerung wirkt gegen ein Versetzen des selbstlochenden Elements 1 in Richtung der Längsachse L des selbstlochenden Elements 1. Zudem wirkt diese Verankerung gegen ein Verdrehen des selbstlochenden Elements um seine Längsachse L. Um diese Art der Verankerung des selbstlochenden Elements 1 zu unterstützen, weist die Schneidgeometrie 20 in der Draufsicht eine runde, ovale, elliptische oder polygonale Gestalt auf. Es versteht sich von selbst, dass die verschiedenen bisher und im Folgenden beschriebenen konstruktiven Merkmale des selbstlochenden Elements 1 beliebig miteinander kombinierbar sind, auch wenn nur ausgewählte Kombinationen in den illustrierenden Ausführungsformen gezeigt sind.

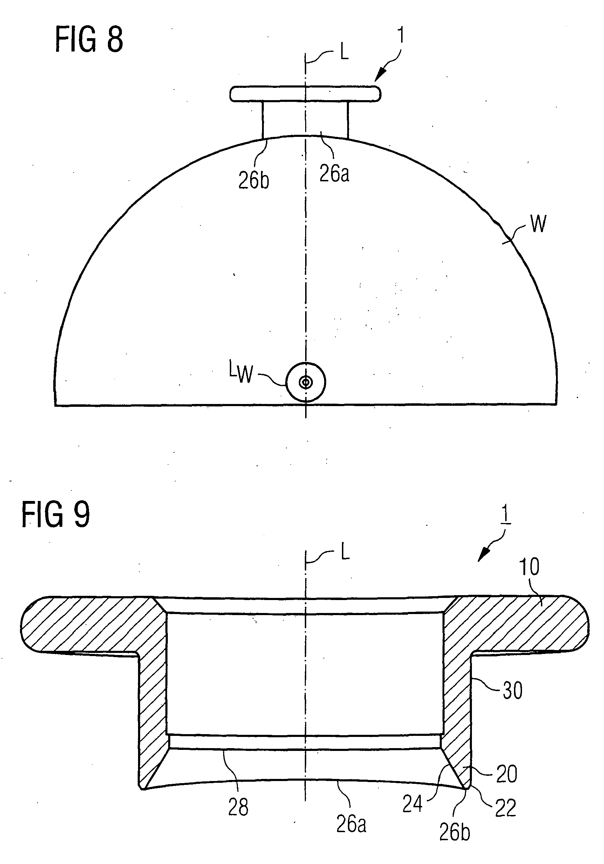

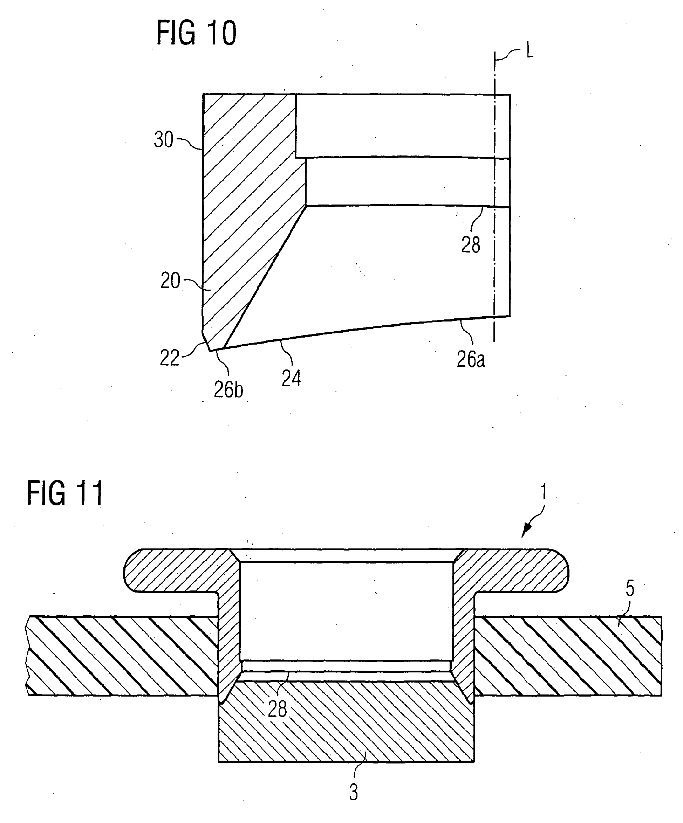

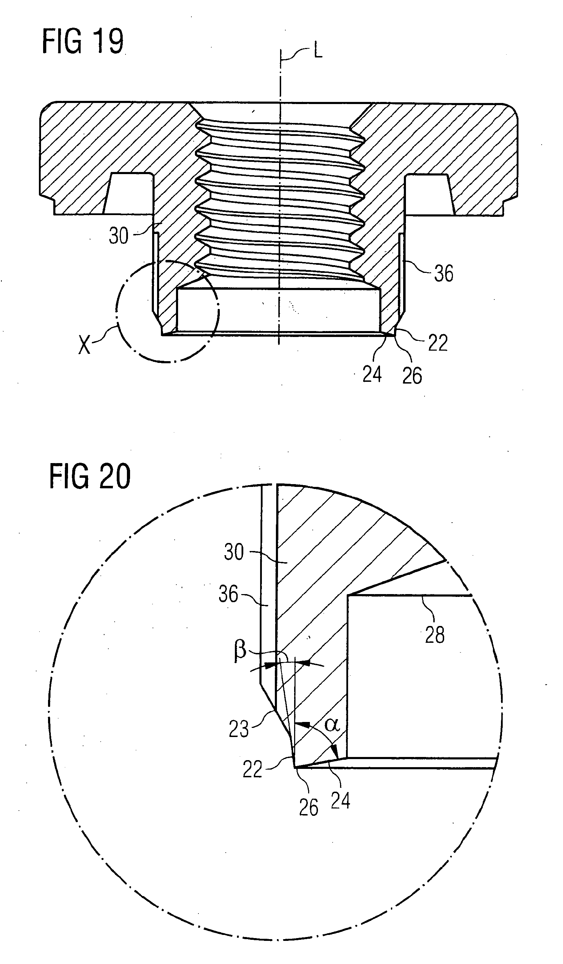

Die Schneidgeometrie 20 des selbstlochenden Elements 1 ist detailliert in den Figuren 9 und 10 und gemäß einer weiteren Ausführungsform in den Figuren 19 und 20 dargestellt. Allgemein ist die Schneidgeometrie 20 im Querschnitt entweder rund oder polygonal ausgebildet. Sie umfasst die bereits oben genannte und bezogen auf die Längsachse L radial innenliegende Innenfase 24. Die Innenfase 24 bildet beim Setzen des selbstlochenden Elements 1 einen ringförmigen Kontakt mit dem Strukturbauteil 5. Die Fläche der Innenfase 24 muss derart eingestellt sein, dass die maximal zulässige Flächenpressung in Bezug auf das Material des Strukturbauteils 5 nicht überschritten wird. Dies ist über die axiale Erstreckung der Innenfase 24 sowie über deren umfängliche Länge einstellbar.

Zudem umfasst die Schneidgeometrie 20 eine radial außen angeordnete Außenfase 22. Die Außenfase 22 dient als eine der Sitzgeometrie 30 voreilende Zentrierung, um ein Verkippen des selbstlochenden Elements 1 während des Setzvorgangs zu verhindern. Vorzugsweise erstreckt sich die Außenfase 22 parallel zur Längsachse L über eine Länge von 0,1 bis 0,2 mm in einem Winkel von 10° in Bezug auf die Längsachse L.

Zwischen Innenfase 24 und Außenfase 22 ist eine Schnittkante 26 angeordnet. Die Schnittkante 26 gewährleistet das Setzen des selbstlochenden Elements 1 im Strukturbauteil 5 ohne Vorlochen. Die Schnittkante 26 ist gemäß einer bevorzugten Ausführungsform 0,15 ± 0,1 mm breit.

Gemäß einer weiteren bevorzugten Ausgestaltung ist die Schnittkante 26 als eine zurückweichende Schnittkante 26a, b ausgebildet (vgl. Figuren 8 bis 10). Die zurückweichende Schnittkante 26a, b ist derart geformt, dass sie auf einer Außenfläche einer gedachten Walze W verläuft (vgl. Fig. 8). Die Längsachse L_{w} der Walze W ist senkrecht zur Längsachse L des selbstlochenden Elements 1 angeordnet. Daraus folgt, dass ein Teil 26a der Schnittkante 26 in Richtung der Längsachse L versetzt zum verbleibenden Teil 26b der Schnittkante 26 angeordnet ist. Im Speziellen weicht die Schnittkante 26a in Richtung der Sitzgeometrie 30 zurück. Basierend auf dieser Konstruktion ergibt sich ein zentrierender selbstziehender Stanz- bzw. Lochprozess des selbstlochenden Elements 1 während des Setzens. Zudem ist die Schnittkante 26 in ihrer Länge über die geeignete Wahl eines Durchmessers der Walze W an den Werkstoff des Strukturbauteils 5 anpassbar, um optimale Ergebnisse beim Setzen des selbstlochenden Elements 1 zu erzielen.

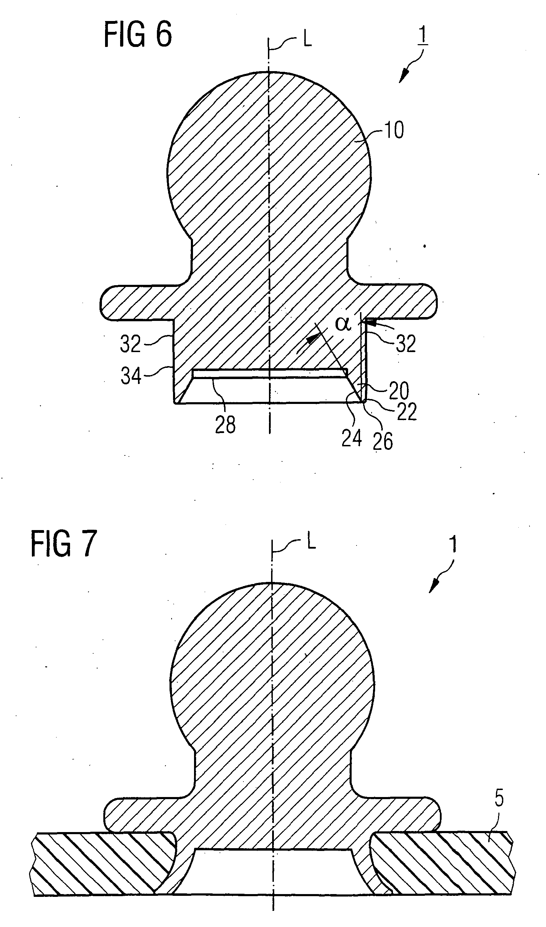

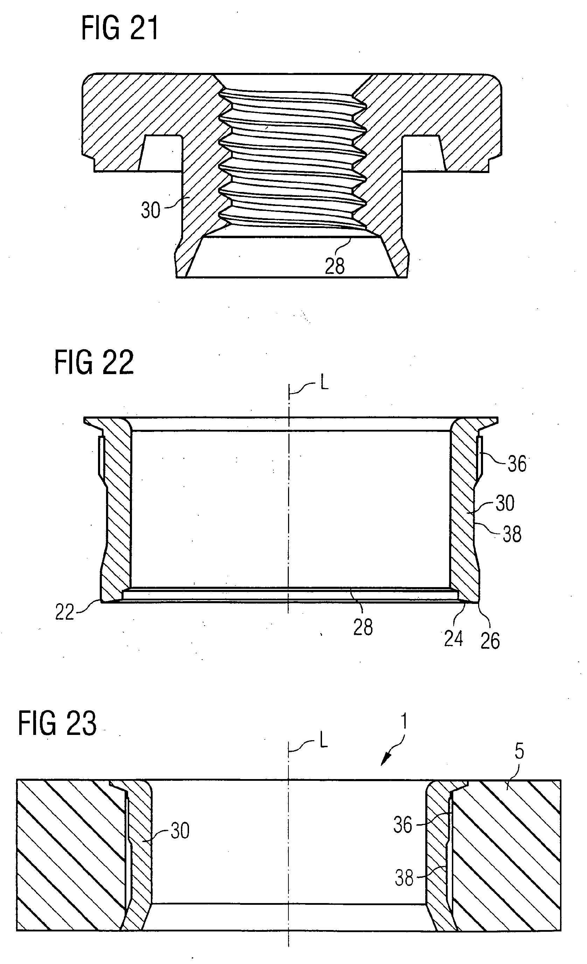

Eine weitere Ausgestaltung der Schneidgeometrie ist in den Figuren 19 bis 23 dargestellt. In Figur 19 ist eine bevorzugte Ausführungsform des selbstlochenden Elements 1 dargestellt, während Figur 20 den in Figur 19 eingekreisten Bereich vergrößert darstellt. Man kann erkennen, dass die Schneidgeometrie ebenfalls die Außenfase 22, die Schnittkante 26 und die Innenfase 24 umfasst. In den Ausführungsformen der Figuren 1 bis 11 ist die Innenfase 24 in einem Winkel α≤ 45° bezogen auf die Längsachse des selbstlochenden Elements 1 angeordnet (vgl. Fig. 6). Weiter bevorzugt sind in diesem Zusammenhang Winkelbereiche von 30° bis 40°, da mit kleiner werdenden Winkeln α die Aufweitung bzw. das Umbördeln während des Setzprozesses des selbstlochenden Elements 1 erleichtert wird.

In den Ausführungsformen der Figuren 19 bis 22 ist die Innenfase 24 in einem Winkel a≥60°, vorzugsweise in einem Winkelbereich von 70°≤α<85°, zur Längsachse L des selbstlochenden Elements 1 angeordnet. Die Außenfase 22 schließt einen Winkel β von 0° bis 30° mit der Längsachse L des selbstlochenden Elements 1 ein. Zwischen Innen- 24 und Außenfase 22 ist die Schnittkante 26 angeordnet. Diese Konstruktion der Schneidgeometrie ist besonders beim Setzen des selbstlochenden Elements 1 in harten Kunststoffe, wie bspw. CFK, geeignet. Ergänzt wird die Außenfase 22 optional durch eine weitere radial auswärts von der Außenfase 22 angeordnete Außenfase 23. Diese unterstützt ebenfalls das Setzen des selbstlochenden Elements 1. Zudem wird sie bei selbstlochenden Elementen 1 eingesetzt, die einen geringen Überstand nach dem Setzen in dem Strukturbauteil 5 zeigen. Dies ist bspw. bei Strukturbauteilen 5 mit geringer Dickenvariation der Fall, so dass die Länge des selbstlochenden Elements 1 besser an die Dicke des Strukturbauteils 5 anpassbar ist. Im Vergleich dazu eignet sich die Konstruktion der selbstlochenden Elemente 1 der Figuren 1 bis 11 besonders für weiche Kunststoffe oder wenn das selbstlochende Element 1 in nach der Urformung noch weiche Strukturbauteile 5 gesetzt wird. Bevorzugte Materialien sind Polypropylen (PP) oder Glasmattenverstärkte Thermoplaste (GMT) in einem presswarmen Zustand bei einer Temperatur von ≥50 °C.

Zudem sind die selbstlochenden Elemente 1 der Figuren 1 bis 11 zur Kompensation von Dickenvariationen im Strukturbauteil 5 geeignet. Die selbstlochenden Elemente 1 werden bei diesen Dickenvariationen zwar mit unterschiedlich großen Längenüberständen am Strukturbauteil 5 gesetzt. Diese Längenüberstände lassen sich im Setzprozess jedoch geeignet umbördeln, so dass sie zur Befestigung und zum Halt des selbstlochenden Elements 1 beitragen und zudem die Qualität des Strukturbauteils 5 mit selbstlochendem Element 1 nicht beeinträchtigen.

Wie aus den Figuren 4 und 5 hervorgeht, ist die Sitzgeometrie 30 in einen ersten 32 und einen zweiten Sitzbereich 34 unterteilt. Die Sitzgeometrie 30 ist vorzugsweise abgerundet gemäß Fig. 6 oder polygonal ausgebildet, wie Fig. 4 zeigt. Zudem ist sie auch in ihrem Querschnitt kreisförmig, oval, elliptisch oder polygonal. In diesem Zusammenhang besteht eine Ausführungsform darin, den ersten Sitzbereich 32 in axialer Richtung konisch auszubilden. In Bezug auf die Längsachse L des selbstlochenden Elements 1 verläuft der erste Sitzbereich 32 in einem Winkel von 5 *±* 0,5 °. In gleicher Weise ist es natürlich ebenfalls denkbar, den Sitzbereich 32 zylindrisch zu konstruieren. Der zweite Sitzbereich 34 schließt sich an den ersten Sitzbereich 32 an und ist zylindrisch ausgeformt.

Während des Setzvorgangs des selbstlochenden Elements 1 wird der zweite Sitzbereich 34 konisch aufgeweitet, um das selbstlochende Element 1 zu verankern (vgl. Figuren 5 und 7). Durch dieses Aufweiten während des Setzens des selbstlochenden Elements 1 wird eine im Vergleich zum Stand der Technik deutlich verbesserte axiale Fixierung des selbstlochenden Elements 1 im Strukturbauteil 5 erzielt. Des Weiteren führt das Aufweiten des zweiten Sitzbereichs 24 zu einer erhöhten radialen Klemmung des selbstlochenden Elements 1. Diese ergibt eine Rotationshemmung, die beispielsweise durch eine polygonale oder nicht runde Ausformung der Schneidgeometrie 20 in der Draufsicht unterstützt wird. Gemäß einer bevorzugten Ausführungsform in diesem Zusammenhang erstreckt sich der erste Sitzbereich 32 über 30 % und der zweite Sitzbereich 34 über 70 % der Materialdicke des Kunststoffbauteils bzw. Strukturbauteils 5 an der Fügestelle des selbstlochenden Elements 1. Basierend auf dieser Dimensionierung des selbstlochenden Elements 1 ist ein bündiger Abschluss der umbördelten Schneidgeometrie 20 an der entsprechenden Seite des Strukturbauteils 5 realisierbar. Bei weniger genauer Dimensionierung ist zudem gewährleistet, dass die Schneidgeometrie 20 nach dem Setzvorgang nur vernachlässigbar gering an der entsprechenden Seite des Strukturbauteils übersteht (ca. 0,5 mm).

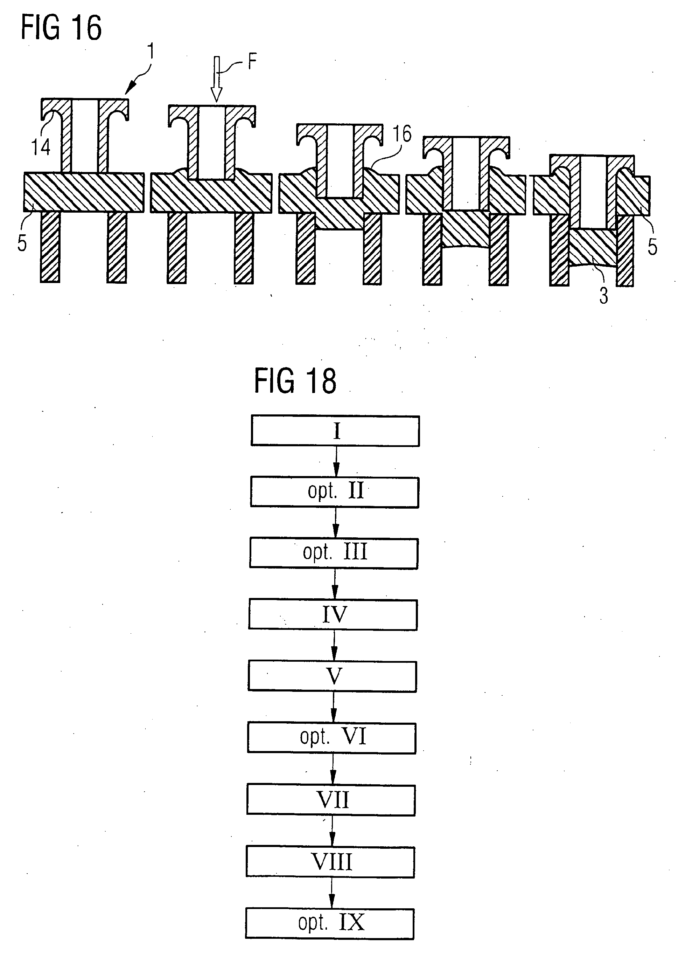

Gemäß einer weiteren Ausgestaltung ist der Funktionskopf 10 an seiner dem Strukturbauteil 5 zugewandten Seite in Abhängigkeit vom Material des Kunststoff-Strukturbauteils 5 mit einer radial umlaufenden Unterkopfnut 14 (vgl. Fig. 5) ausgestattet. Gerade beim Setzen des selbstlochenden Elements 1 in relativ weichen Kunststoff-Strukturbauteilen 5 nimmt die Unterkopfnut 14 eine Materialanhäufung 16 beim Setzen des selbstlochenden Elements 1 auf. Mit Hilfe dieser Konstruktion wird ein optimales Aufsetzen des Funktionskopfs 10 auf dem Strukturbauteil 5 unterstützt. Die Funktion der Unterkopfnut 14 ist schematisch anhand von Fig. 16 veranschaulicht. Fig. 16 zeigt verschiedene aufeinander folgende Zustände während des Setzvorgangs des selbstlochenden Elements 1 in einem Kunststoff-Strukturbauteil 5. Während das selbstlochende Element 1 in Fügerichtung F in das Strukturbauteil 5 eingedrückt wird, findet ein Materialfluss entgegen der Fügerichtung F statt. Dieser Materialfluss bildet eine Materialanhäufung 16 angrenzend an die Sitzgeometrie 30 des selbstlochenden Elements 1 aus. Damit die Materialanhäufung 16 das Aufsetzen des Funktionskopfs 10 auf dem Strukturbauteil 5 nicht behindert, ist die Unterkopfnut 14 derart dimensioniert, dass sie die Materialanhäufung 16 aufnimmt. Auf diese Weise ist gewährleistet, dass sich der Funktionskopf 10 optimal am Strukturbauteil 5 abstützt.

Gemäß einer weiteren Ausführungsform ist es bevorzugt, den Funktionskopf 10 an einer der Schneidgeometrie 20 zugewandten Seite mit einer vorstehenden Unterkopfkontur 12 auszustatten. Diese Unterkopfkontur 12 gewährleistet eine definierte Auflage des selbstlochenden Elements 1 auf dem Strukturbauteil 5 und unterstützt auf diese Weise dessen stabile Befestigung.

Eine weitere, den Halt des selbstlochenden Elements 1 im Strukturbauteil 5 unterstützende Konstruktion geht aus den Figuren 19 bis 23 hervor. An der radialen Außenseite der Sitzgeometrie 30 ist eine Haltestruktur 36 angeordnet. Während des Setzens des selbstlochenden Elements 1 verankert sich diese Haltestruktur 36 im Material des Strukturbauteils 5 und unterstützt den Halt des selbstlochenden Elements 1 im Strukturbauteil 5. Die Haltestruktur 36 besteht aus parallel und/oder senkrecht zur Längsachse L verlaufenden Stegen, während auch andere Orientierungen zur Längsachse L denkbar sind. Auf diese Weise bildet die Haltestruktur 36 einen Hinterschnitt gegen bspw. axiales Versetzen des selbstlochenden Elements 1 innerhalb des Strukturbauteils 5. Zu diesem Zweck umfasst die Haltestruktur 36 Profilwinkel die in Abhängigkeit vom Material des Strukturbauteils 5 ausgeformt sind. Die Profilwinkel haben vorzugsweise eine Größe von 60°±10° oder 50°±20° mit voll ausgeprägten Spitzen von 70 % bis 100 %.

In einer weiteren Ausgestaltung umfasst die Sitzgeometrie 30 an ihrer radialen Außenseite einen radial nach innen versetzten Sitzbereich 38, der eine Tasche für das Material des Strukturbauteils 5 im Sitzbereich 30 bildet. Der nach innen versetzte Sitzbereich 38 gestattet dem Material des Strukturbauteils 5 während und nach dem Setzprozess relaxierend in die gebildete Tasche zu fließen. Auf diese Weise werden mechanische Spannungen im Material abgebaut und der Halt des selbstlochenden Elements 1 unterstützt.

Die oben beschriebenen Konstruktionen des selbstlochenden Elements 1 sind besonders wirkungsvoll, wenn das selbstlochende Element in faserverstärkte Kunststoffe gesetzt wird. Mit ihrer Hilfe werden die Anisotropien aufgrund der Faserverstärkung sowie bestehende Unterschiede in den Steifigkeiten im Strukturbauteil 5 in Abhängigkeit von beispielsweise der Bauteiltemperatur überwunden. Zudem zeigt sich anhand der oben beschriebenen Geometrien des selbstlochenden Elements 1, dass im Gegensatz zum Fügen von Blechen gerade obige Merkmale erforderlich sind.

Als bevorzugtes Material für das selbstlochende Element 1 werden geeignete Kaltschlagwerkstoffe eingesetzt. Diese sind widerstandsfähig beim Setzen des selbstlochenden Elements 1 und verhindern ein Einreißen des selbstlochenden Elements 1 im Bördelbereich bzw. im zweiten Sitzbereich 34 und der Schneidgeometrie 20, die ein starkes Umformen erfahren. Basierend auf dieser Werkstoffauswahl wird bei der Vernietung der Schneidgeometrie 20 und des zweiten Sitzbereichs 34 ein anrissfreier ringförmiger Kontakt bei gleichzeitiger hoher Festigkeit der Schnittkante 26 erzielt. Dieser anrissfreie Ringkontakt mit dem Strukturbauteil 5 gestattet beispielsweise die Übertragung von hohen Verschraubungskräften und behindert zudem die Neigung des Kunststoffs des Strukturbauteils 5 zur Relaxation.

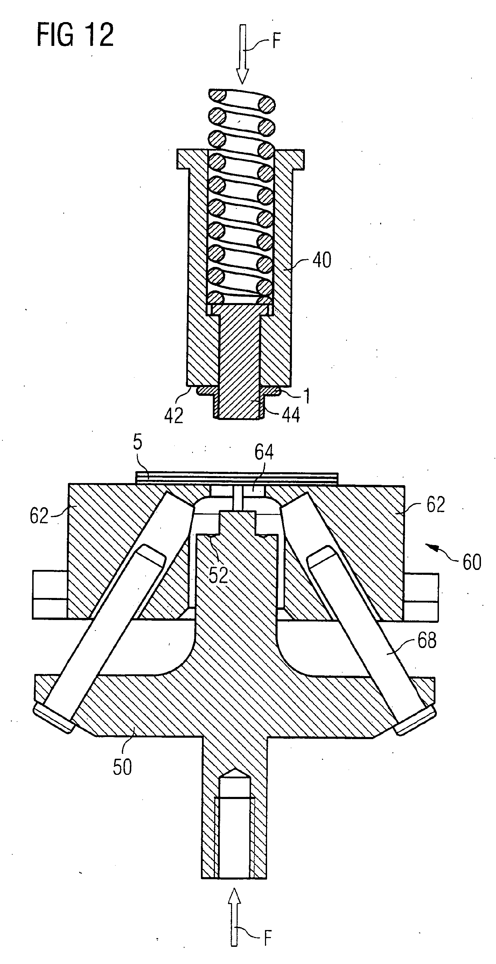

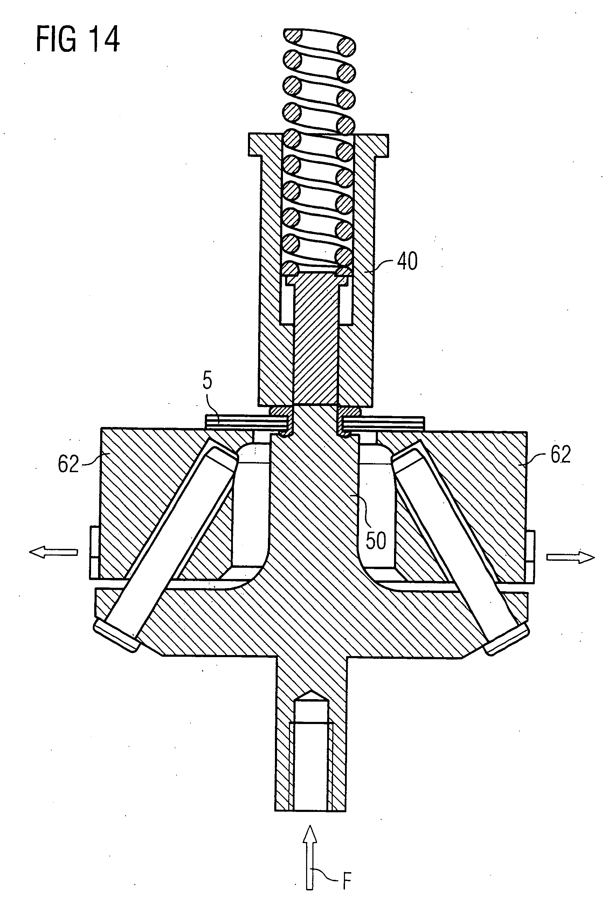

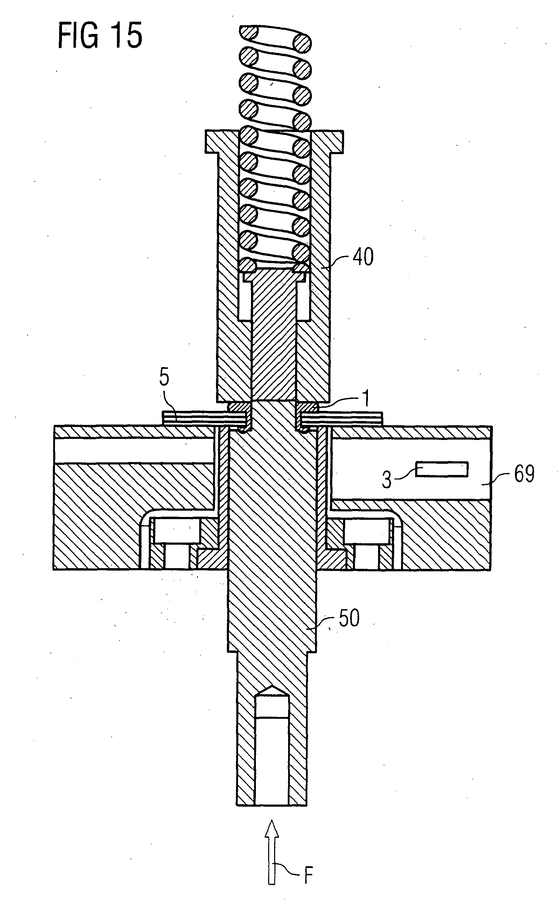

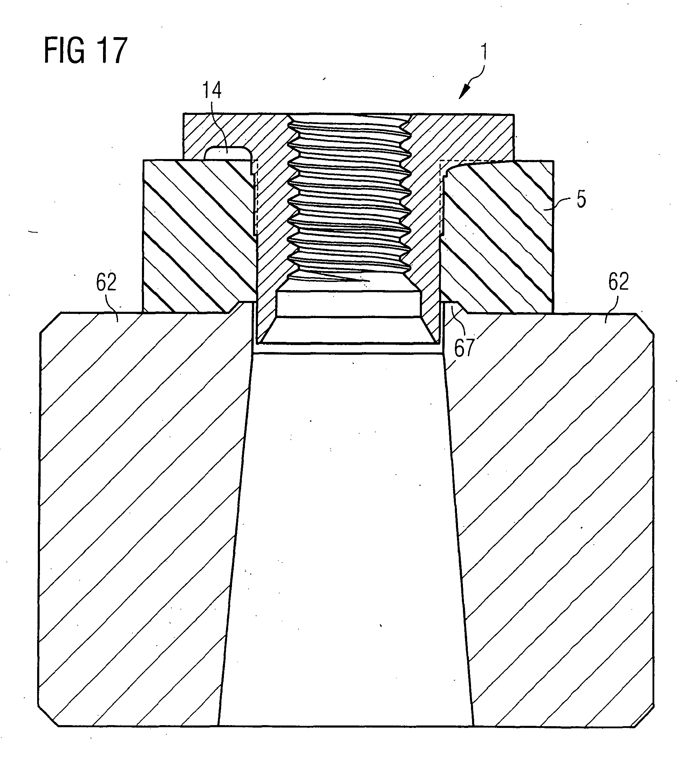

Das selbststanzende Element 1 wird mit einer Vorrichtung gesetzt, wie sie in den Figuren 12 bis 15 dargestellt ist. Die Figuren 12 bis 15 zeigen unterschiedliche Stufen eines Setzverfahrens, dass gemäß einer bevorzugten Ausführungsform aus dem Flussdiagramm in Fig. 17 hervorgeht. Wie in den Figuren 12 bis 15 gezeigt ist, wird die Vorrichtung und das Setzverfahren am Beispiel des Setzens eines selbstlochenden Elements 1 gemäß Fig. 1B erläutert.

Die Vorrichtung zum Setzen des selbstlochenden Elements 1 ist als ein in sich abgeschlossenes Werkzeug aufgebaut. Es erlaubt damit den Einsatz als Festeinbau in einer Maschine, die zusätzliche Bearbeitungen am Kunststoff-Strukturbauteil 5 durchführt. Eine weitere Alternative besteht darin, die Vorrichtung als ein Anbauwerkzeug für eine Montage an einem automatischen Handlingsgerät, beispielsweise ein Mehrachsen-Roboter, zu nutzen. In diesem Zusammenhang ist es ebenfalls denkbar, die Vorrichtung als ein Anbauwerkzeug für eine Montage an ein manuelles Handlingsgerät, beispielsweise ein Gestell mit Seilführung, einzusetzen.

Zunächst wird das selbstlochende Element 1 gemäß Schritt I (vgl. Fig. 18) an einem Stempel 40 (vgl. Fig. 12) positioniert. Die Positionierung des selbstlochenden Elements 1 erfolgt bevorzugt mittels einer handelsüblichen Vereinzelung. Sie kann aber auch manuell realisiert werden.

Der Stempel 40 umfasst eine Aufnahmekontur 42 mit Halterung für das selbstlochende Element 1. Die Aufnahmekontur 42 überträgt einerseits die axiale Fügekraft auf das selbstlochende Element 1. Andererseits dient sie als Gegenhalter für die Vernietung bzw. Umbördelung der Schneidgeometrie 20 des selbstlochenden Elements 1 durch ein Nietwerkzeug 50 (s. unten). Des Weiteren besitzt der Stempel 40 einen federvorgespannten voreilenden Bereich 44, der mit dem Nietwerkzeug 50 zusammenwirkt.

Vor dem Setzvorgang wird das Strukturbauteil 5 auf einer Matrize 60 positioniert (vgl. Schritt VI). Die Matrize 60 besteht aus mindestens zwei bewegbaren Matrizensegmenten 62. Zwischen den Matrizensegmenten 62 ist eine Öffnung 64 vorgesehen, in die während des Setzvorgangs das selbstlochende Element 1 eingreift. Vor Beginn des Setzvorgangs erfolgt optional ein Positionieren der Matrizensegmente 62 gemäß Schritt II. Über das Positionieren der Matrizensegmente 62 wird ein Spalt 66 zwischen der Innenseite der Öffnung 64 und der Außenseite des selbstlochenden Elements 1 in seiner Breite in Abhängigkeit vom Material des Strukturbauteils 5 eingestellt. Bei der Einstellung der Spaltbreite ist es ebenfalls denkbar, die Bedingungen des Setzvorgangs zu berücksichtigen, um das selbstlochende Element 1 optimal zu befestigen.

Die Spaltbreite für einen Kunststoff wie GMT bei Raumtemperatur, bei dem es sich um eine eher feste Struktur handelt, (z.B. GMT GF40 bei 20°C) sollte in der Größenordnung von 0,25 bis 0,40 mm liegen. Bei einem Kunststoff wie PP Langfaser bei erhöhter Temperatur, bei dem es sich um eine eher zähe Struktur handelt, (z.B. PP GF30 bei 60°C) sollte die Spaltbreite in der Größenordnung von 0,0625 bis 0,1155 mm betragen.

Die Breite des Spalts 66 und die Größe der Öffnung 64 werden über das Verschieben der Matrizensegmente 62 mit Hilfe von Zylindern oder Zwangsführungen 68 realisiert.

Gemäß eines weiteren optionalen Verfahrensschritts ist es bevorzugt, das Strukturbauteil 5 aus Kunststoff zumindest im Bereich der Fügestelle des selbstlochenden Elements 1 zu erwärmen. Ein gleiches Resultat würde dadurch erzielt werden, dass man das Strukturbauteil 5 nach seiner Herstellung noch vor vollständiger Abkühlung der Vorrichtung zuführt, um den Setzvorgang zu beginnen. Der erwärmte Kunststoff des Strukturbauteils 5 erleichtert das Einschneiden des selbstlochenden Elements 1 und somit den gesamten Setzvorgang.

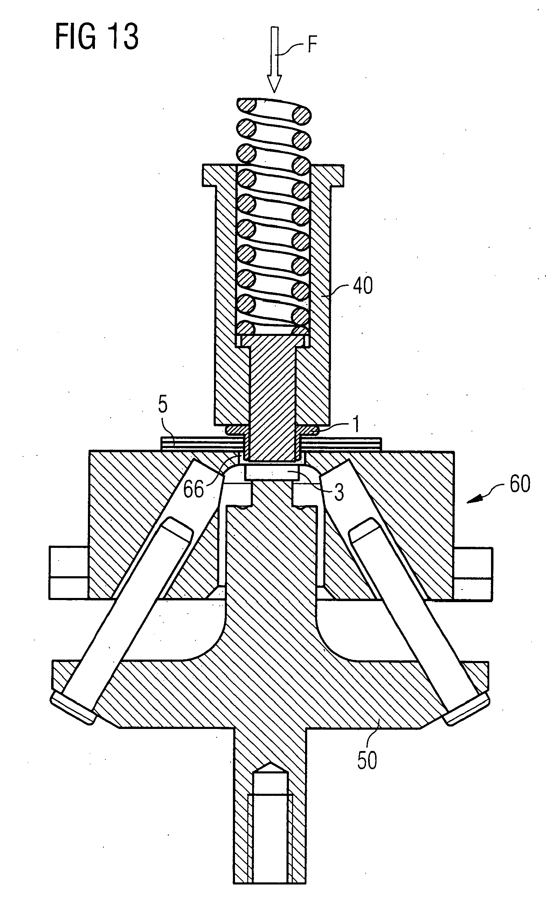

Nachdem das Strukturbauteil 5 entsprechend auf der Matrize 60 positioniert worden ist (vgl. Schritt IV), erfolgt das Ausschneiden des Butzens 3 aus dem Strukturbauteil 5 durch Zustellen des Stempels 40 in Fügerichtung F (Schritt V). In den Figuren 12 und 13 ist dargestellt, wie das selbstlochende Element 1 den Butzen 3 durch Zustellen des Stempels 40 aus dem Strukturbauteil 5 herausschneidet. In Figur 13 ist der Butzen 3 bereist herausgeschnitten und das selbstlochende Element 1 befindet sich in der Öffnung 64 mit dem Spalt 66 zwischen den angrenzenden Matrizensegmenten 62 und dem selbstlochenden Element 1. Nach Beendigung des Einstanz- bzw. Lochvorgangs werden die Matrizensegmente 62 radial nach außen verschoben. Wird beispielsweise eine Matrize 60 mit zwei bis vier Matrizensegmenten 62 eingesetzt, werden die Matrizensegmente 62 vorzugsweise über die Zwangsführungen 68 bewegt. Diese Zwangsführungen 68 sind an die axiale Zustellbewegung des Nietwerkzeugs 50 gekoppelt, so dass bei Zustellung des Nietwerkzeugs 50 die Matrizensegmente 62 vom selbststanzenden Element 1 weg bewegt werden. Mit Hilfe der Kopplung zwischen Zwangsführung 68 und Nietwerkzeug 50 ist somit eine aktive Prozessregelung des Setzvorgangs möglich, aber nicht notwendig.

Das Nietwerkzeug 50 umfasst eine an die Schneidgeometrie 20 des selbstlochenden Elements 1 angepasste Nietkontur 52, mit der die Schneidgeometrie 20 radial auswärts umgeformt wird. Nachdem der Butzen 3 durch das selbstlochende Element 1 ausgeschnitten worden ist, wird er über eine Abstützkante 54 und die geschlossene Matrize 60 festgehalten. Nun kann das Entfernen der Matrizensegmente vom selbstlochenden Element 1 gemäß Schritt VII und das Umformen der Schneidgeometrie 20 des selbstlochenden Elements 1 durch das Zustellen des Nietwerkzeugs 50 zum Strukturbauteil 5 gemäß Schritt VIII erfolgen. Damit der Butzen 3 bei diesem Vorgang keine Störung hervorruft, wird er über geeignete Kanäle 69 in der Matrize 60 abtransportiert (vgl. Schritt IX). Der Abtransport des Butzens 3 erfolgt durch einen mechanisch übertragenen Impuls oder mit Hilfe eines Mediums, wie beispielsweise Luft.

Zum Umformen der Schneidgeometrie 20 und des zweiten Sitzbereichs 34 vernietet die daran angepasste Nietkontur 52 die entsprechenden Bereich radial nach außen. Auf diese Weise wird eine radial nach außen abgerundet verlaufende Form von Schneidgeometrie 20 und zweitem Sitzbereich 34 innerhalb des Strukturbauteils 5 erzeugt, wie sie in den Figuren 2, 3, 5, 7 erkennbar ist. Bei diesem Umformen durch die Nietkontur 52 ist es im Speziellen bevorzugt, eine oberflächenebene Vernietung bzw. Umbördelung des selbstlochenden Elements 1 zu erzielen. Dies stellt sicher, dass beispielsweise das Strukturbauteil 5 ohne Höhenversatz an einer Rahmenstruktur eines Kraftfahrzeugs befestigbar ist. Es ist natürlich ebenfalls denkbar, das selbstlochende Element 1 mit einem geringen Höhenversatz in dem Strukturbauteil 5 zu befestigen.

Zur Unterstützung der bereits oben genannten oberflächenebenen Vernietung des selbstlochenden Elements 1 wird vorzugsweise die Matrize 60 angrenzend an die Öffnung 64 mit einer in Richtung des Stempels 40 vorstehenden Kontur 67 ausgestattet (vgl. Fig. 17). Während des Setzvorgangs des selbststanzenden Elements 1 durch den Stempel 40 wird diese vorstehende Kontur 67 in das Strukturbauteil 5 eingeprägt und erzeugt auf diese Weise eine Senke im Strukturbauteil 5. Innerhalb dieser Senke (nicht gezeigt) kann dann das vernietete bzw. umbördelte Ende des selbstlochenden Elements 1 trotz Überstand an der Oberfläche des Strukturbauteils "verschwinden", so dass auf diese Weise eine oberflächenebene Vernietung bzw. Umbördelung in Bezug auf die Unterseite des Strukturbauteils 5 erzielt wird.

Das radiale Öffnen der Matrize 60 erfolgt durch die bereits oben genannten Zwangsführungen 68, die zwischen den Matrizensegmenten 62 und dem Nietwerkzeug 50 angeordnet sind. Da während der Zustellbewegung des Nietwerkzeugs 50 die Matrizensegmente 62 seitlich weg bewegt werden, steht ein ausreichend großer Bereich zur Verfügung, der der angepassten Nietkontur 52 Zugang zur Schneidgeometrie 20 verschafft und das Vernieten bzw. Umbördeln ermöglicht.

Gemäß einer weiteren Alternative des vorgestellten Setzverfahrens ist es denkbar, das Strukturbauteil 5 aus Kunststoff zumindest im Bereich der Setzstelle des selbstlochenden Elements 1 zu erwärmen (vgl. Schritt III). In gleicher Weise wäre es möglich, das Strukturbauteil 5 nach seiner Herstellung noch vor vollständiger Abkühlung der Vorrichtung zuzuführen, um das Setzen des selbstlochenden Elements 1 zu erleichtern.

Kennzeichnend für den Setzprozess des selbstlochenden Elements ist eine relativ zueinander radial unbewegliche Positionierung des selbststanzenden Elements 1, der Vorrichtung und des Strukturbauteils 5 während des gesamten Setzvorgangs. Der sich damit ergebene Vorteil besteht in der Integration der einzelnen Verfahrensschritt ohne die Notwendigkeit der jeweils neuen Positionierung des selbststanzenden Elements 1 und des Strukturbauteils 5 zwischen den Verfahrensschritten. Dies verringert die Störanfälligkeit des Verfahrens und trägt zur Optimierung des Setzverfahrens bei.

## Patentansprüche

1. Selbstlochendes Element (1), das mittels Lochen und Umbördeln mit einem Strukturbauteil (5), vorzugsweise aus Kunststoff, verbindbar ist und die folgenden Merkmale aufweist:
a. einen an einem Ende des Elements (1) und koaxial zur Längsachse (L) des Elements (1) angeordneten Funktionskopf (10),
b. eine koaxial zur Längsachse (L) des Elements (1) angeordnete Schneidgeometrie (20) sowie eine zwischen Funktionskopf (10) und Schneidgeometrie (20) angeordnete Sitzgeometrie (30), während
c. die Schneidgeometrie (20) eine radial außen angeordnete zentrierende Außenfase (22), eine radial innen angeordnete Innenfase (24) sowie eine dazwischen angeordnete Schnittkante (26) umfasst.

2. Selbstlochendes Element (1) gemäß Anspruch 1, dessen Schneidgeometrie (20) abgerundet oder polygonal vorgesehen ist.

3. Selbstlochendes Element (1) gemäß einem der vorhergehenden Ansprüche, dessen Schnittkante (26) eine Breite von 0,15±0,1 mm aufweist.

4. Selbstlochendes Element (1) gemäß einem der vorhergehenden Ansprüche, dessen Außenfase (22) sich über eine Länge von 0,1-0,2 mm ab der Schnittkante (26) erstreckt und in einem Winkel von 10° zur Längsachse (L) des selbstlochenden Elements (1) angeordnet ist.

5. Selbstlochendes Element (1) gemäß einem der vorhergehenden Ansprüche, dessen Innenfase in einem ersten Winkel a≤45°, vorzugsweise 30° bis 40°, zur Längsachse (L) des selbstlochenden Elements (1) oder in einem zweiten Winkel β≥60°, vorzugsweise in einem Winkelbereich von 70° bis 85°, zur Längsachse (L) des selbstlochenden Elements (1) angeordnet ist.

6. Selbstlochendes Element (1) gemäß einem der vorhergehenden Ansprüche, das eine zweite Außenfase (23) aufweist, die radial auswärts von der außen angeordnete zentrierenden Außenfase (22) angeordnet ist.

7. Selbstlochendes Element (1) gemäß einem der vorhergehenden Ansprüche, dessen Sitzgeometrie (30) an ihrer radialen Außenseite eine unterstützende Haltestruktur (36) und/oder einen radial nach innen versetzten Sitzbereich (38) aufweist.

8. Selbstlochendes Element (1) gemäß einem der vorhergehenden Ansprüche, dessen Schneidgeometrie (20) in ihrer Länge anpassbar ist auf einen sich ergebenden ringförmigen Kontakt zwischen Element (1) und Strukturbauteil (5) und/oder an eine zulässige Flächenpressung des Strukturbauteils (5).

9. Selbstlochendes Element (1) gemäß einem der vorhergehenden Ansprüche, dessen Schnittkante (26) entlang einer Außenfläche einer gedachten Walze (W) verläuft, deren Walzenlängsachse (LW) senkrecht zur Längsachse (L) des selbstlochenden Elements (1) angeordnet ist, so dass ein Teil der Schnittkante (26a) in Bezug auf die verbleibende Schnittkante (26b) in Richtung der Längsachse (L) des selbstlochenden Elements (1) versetzt ist.

10. Selbstlochendes Element (1) gemäß einem der vorhergehenden Ansprüche, das eine Abstützkante (28) aufweist, mit der ein ausgeschnittener Butzen (3) abfangbar und ein Verklemmen des Butzens (3) im selbstlochenden Element (1) verhinderbar ist.

11. Selbstlochendes Element (1) gemäß einem der vorhergehenden Ansprüche, dessen Sitzgeometrie (30) einen ersten (32) und einen zweiten Sitzbereich (34) aufweist, während der zweite Sitzbereich (34) zum Befestigen des selbstlochenden Elements (1) konisch aufweitbar ist.

12. Selbstlochendes Element (1) gemäß Anspruch 11, dessen erster Sitzbereich (32) zylindrisch oder konisch, vorzugsweise mit einem Kegelwinkel von 5±0,5 ° in Bezug auf die Längsachse (L), ausgebildet ist.

13. Selbstlochendes Element (1) gemäß Anspruch 11 oder 12, dessen erster Sitzbereich (32) sich über 30 % und dessen zweiter Sitzbereich (34) sich über 70 % einer Dicke des Strukturbauteils (5) erstreckt.

14. Selbstlochendes Element (1) gemäß einem der vorhergehenden Ansprüche, dessen Schneidgeometrie (20) in der Draufsicht eine runde, ovale, elliptische oder polygonale Gestalt aufweist.

15. Selbstlochendes Element (1) gemäß einem der vorhergehenden Ansprüche, dessen Funktionskopf (10) an einer der Schneidgeometrie (20) zugewandten Seite eine vorstehende Unterkopfkontur (12) aufweist, die eine definierte Auflage des selbstlochenden Elements (1) auf dem Strukturbauteil (5) unterstützt.

16. Selbstlochendes Element (1) gemäß einem der vorhergehenden Ansprüche, dessen Funktionskopf (10) an einer der Schneidgeometrie (20) zugewandten Seite eine Unterkopfnut (14) aufweist, in der eine Materialanhäufung beim Setzen des selbstlochenden Elements (1) aufnehmbar ist, um ein Aufsetzen des Funktionskopfs (10) auf dem Strukturbauteil (5) zu unterstützen.

17. Strukturbauteil (5), vorzugsweise ein Kunststoffbauteil, das mit mindestens einem selbstlochenden Element (1) gemäß einem der vorhergehenden Ansprüche ausgestattet ist.

18. Vorrichtung zum Setzen eines selbstlochenden Elements (1) in einem Strukturbauteil (5), die die folgenden Merkmale aufweist:
a. einen Stempel (40) und ein Nietwerkzeug (50), die gegenüberliegend angeordnet und parallel zu ihrer Längsachse in Fügerichtung (F) bewegbar sind,
b. eine aus mindestens zwei bewegbar angeordneten Segmenten (62) aufgebaute Matrize (60), die eine Öffnung (64) für den Stempel (40) mit selbstlochendem Element (1) definiert, während
c. eine Position der Segmente (62) derart einstellbar ist, dass ein Spalt (66) zwischen Innenseite der Öffnung (64) und Außenseite des selbstlochenden Elements (1) in seiner Breite in Abhängigkeit vom Material des Strukturbauteils (5) und/oder der Bedingungen eines Setzvorgangs anpassbar ist, um das selbstlochende Element (1) optimal zu befestigen.

19. Vorrichtung gemäß Anspruch 15, deren Nietwerkzeug (50) eine an eine Schneidgeometrie (20) des selbstlochenden Elements (1) angepasste Nietkontur (52) aufweist, mit der die Schneidgeometrie (20) radial auswärts umformbar ist.

20. Vorrichtung gemäß Anspruch 18 oder 19, deren Matrize (60) an ihrer dem Stempel (40) zugewandten Seite nahe der Öffnung (64) mit einer radial umlaufenden und vorstehenden Kontur (67) versehen ist, mit der eine Senke im Strukturbauteil (5) generierbar ist.

21. Vorrichtung gemäß einem der Ansprüche 18 bis 20, deren Matrize (60) zumindest einen Kanal (69) aufweist, über den ein Butzen (3) abführbar ist.

22. Setzverfahren für ein selbstlochendes Element (1) in einem Strukturbauteil (5), vorzugsweise ein Kunststoffbauteil, mit Hilfe einer Vorrichtung gemäß einem der Ansprüche 18 bis 21, das die folgenden Schritte aufweist:
a. Positionieren (I) des selbstlochenden Elements (1) mit Schneidgeometrie (20) am Stempel (40),
b. Positionieren (IV) des Strukturbauteils (5) auf der Matrize (60) und Ausschneiden (V) eines Butzens (3) aus dem Strukturbauteil durch Zustellen des Stempels (40) zum Strukturbauteil (5) und
c. Entfernen (VII) der Segmente (62) der Matrize (60) vom selbstlochenden Element (1) und Umformen (VIII) der Schneidgeometrie (20) des selbstlochenden Elements (1) durch Zustellen des Nietwerkzeugs (50, 52) zum Strukturbauteil (5).

23. Setzverfahren gemäß Anspruch 22, das den weiteren Schritt aufweist:
Positionieren (II) der Segmente (62) der Matrize (60) derart, dass ein Spalt (66) zwischen Innenseite der Öffnung (64) und Außenseite des selbstlochenden Elements (1) in seiner Breite in Abhängigkeit vom Material des Strukturbauteils (5) und/oder der Bedingungen eines Setzvorgangs angepasst wird, um das selbstlochende Element (1) optimal zu befestigen.

24. Setzverfahren gemäß Anspruch 22 oder 23, das den weiteren Schritt aufweist:
Erwärmen (III) eines Strukturbauteils (5) aus Kunststoff zumindest im Bereich der Setzstelle des selbstlochenden Elements (1) oder Zuführen des Strukturbauteils (5) aus Kunststoff nach seiner Herstellung noch vor vollständiger Abkühlung der Vorrichtung, um das Setzen des selbstlochenden Elements (1) zu erleichtern.

25. Setzverfahren gemäß einem der vorhergehenden Ansprüche 22 bis 24, das den weiteren Schritt aufweist:
während des Ausschneiden eines Butzens (3) aus dem Strukturbauteil (5) Einbringen (VI) einer Senke in das Strukturbauteil angrenzend an die Schneidgeometrie (20) des selbstlochenden Elements (1).

26. Setzverfahren gemäß einem der vorhergehenden Ansprüche 19 bis 22, das den weiteren Schritt aufweist:
nach dem Ausschneiden eines Butzens (3) aus dem Strukturbauteil (5) Abführen (IX) des Butzens (3) über zumindest einen Kanal in der Matrize (60).
